# EUROPEAN PATENT SPECIFICATION

(11) **EP 3 786 472 B1**
(45) Date of publication and mention of the grant of the patent: **05.10.2022**
(21) Application number: 19382735.9
(22) Date of filing: 30.08.2019
(51) Int. Cl.: F16D 3/18, F16D 3/32, F16D 3/33, F16D 3/38

(54) **CARDAN JOINT CONNECTED TO A DRIVE SHAFT**
MIT EINER ANTRIEBSWELLE VERBUNDENES KARDANGELENK
JOINT DE CARDAN CONNECTÉ À UN ARBRE DE TRANSMISSION

(43) Date of publication of application: 03.03.2021
(73) Proprietor: Maquinaria Agricola y Accesorios, S.L., 50600 Ejea de Los Caballeros (Zaragoza) (ES)
(72) Inventor: URBON PALACIOS, Luis, 50600 Ejea de los Caballeros (Zaragoza) (ES)
(74) Representative: Clarke Modet & Co.

(56) References cited:
- EP-A1- 2 075 103
- GB-A- 2 521 208
- US-A1- 2003 213 352
- US-A1- 2014 274 426
- US-A1- 2016 298 695

## Description

### OBJECT OF THE INVENTION

The following invention relates to a cardan joint connected to a torque drive shaft, the object being that said cardan joint comprises a cogwheel-type drive means for transferring the torque from the drive shaft to a driven shaft, and that said cardan joint, being connected to the drive shaft, can slide axially, enabling distances between said joints greater than those distances obtained with conventional cardan knots.

### BACKGROUND OF THE INVENTION

As is known in the state of the art, two concurrent shafts, which are misaligned by a certain angle, can be joined in general by means of a cardan joint or a cardan knot, such that one of the shafts transmits the rotation to the other driven shaft, transmitting a rotational movement and in turn a torque force can be transmitted, generating a power transmission.

In this way, cardan drives are commonly used in various industries, including being of great application in the agricultural industry, such as for transmitting power from the tractor vehicle to a harvester head, the harvester head of which is supported by the tractor vehicle by means of a three-point hitch with two lower points that facilitate the upwards and downwards movement of the head and a third upper point that facilitates the suitable inclination of the head.

Thus, power is transmitted from the tractor vehicle to the harvesting mechanisms of the head by means of the cardan joints or drives, allowing the variation of the distances caused in the different movements of the head with respect to the tractor vehicle to be absorbed and having to keep in mind that the existing length between a point is variable and of a certain length.

As is known, the cardan joints or knots are simple and robust mechanisms, being constituted by two fork-shaped parts joined together by means of a part provided with cross-shaped projections, the projections of which are mounted on corresponding bearings snap-fitted into respective recesses of the forks and attached by means of flanges, transmitting the movement of the drive shaft, through the crosshead, to the driven shaft, enabling the absorption of the angular differences between the drive shaft and the driven shaft with the limitations due to the geometry and torque transmitted by the joint.

Through this configuration, there are times, such as in the case of mounting the asymmetric head tractor vehicle, when in the step of positioning the head in the folded position for road transport in its work position deployed in the field and vice versa, the head must be moved transversely to the tractor vehicle, so that it is perfectly centred with respect to the same, and conventional cardan drives do not enable the absorption of the movement that the head must have.

Given this situation, the only possibility is that, in order to allow the head to change from its folded position to the unfolded position and vice versa, the cardan drives must be disassembled, for which it is necessary to remove the securing flange from the crosshead at the corresponding fork and, by exerting a manual force, disassemble the fork. This operation, in addition to the time required, presents serious difficulties due to the accumulation of dirt that is deposited in the cardan knot which hinders the disassembly of the flange and the release of the corresponding fork body, as well as the opposite assembly operation.

Furthermore, having a telescopic coupling between conventional cardan joints of greater length that would allow the absorption of said distances is not feasible since, as there is not enough space between the tractor vehicle and the head, it is not possible and it would abut against other elements.

GB 2 521 208 A discloses a cardan joint comprising a plurality of members, including a bushing, a ring and a tubular shaft with one or more intermediate members arranged in pairs: a first pair of annular/elongated projections on opposing sides of the outer surface of bushing; a ring comprising a first pair of elongated recesses on opposing sides of the ring's inner surface, and a second pair of annular/elongated projections on the outer surface of the ring and in orthogonal position to the first pair of annular/elongated recesses; a driven tubular shaft comprising a second pair of annular/elongated recesses on opposing sides of the inner surface of the tubular shaft. Wherein each of the first pair of annular/elongated projections is coupled to and adapted to move along each of the first pair of annular/elongated recesses, each of the second pair of annular/elongated projections is coupled to and adapted to move along each of the second pair of annular/elongated recesses.

### DESCRIPTION OF THE INVENTION

The present specification describes a cardan joint configured to be assembled to a drive shaft, being connected to it, such that the cardan joint according to claim 1 comprises:
➢ a bushing comprising a shaped inner surface, and a first pair of cylindrical projections diametrically facing each other, located on an outer surface and perpendicular to said bushing, that is, to the axis of said bushing;
➢ a ring comprising, on an inner surface, a first pair of recesses, perpendicular to the ring, diametrically facing each other, and a second pair of cylindrical projections also perpendicular to the axis of the ring, wherein each one of the cylindrical projections is orthogonal to each one of the first pair of recesses, on an outer surface of said ring;
➢ a driven tubular shaft comprising a second pair of recesses diametrically facing each other, on an inner surface of said tubular shaft; and
➢ a cogwheel integrally mounted on the driven tubular shaft, configured to engage with a drive means;
wherein the bushing is configured to be connected to a drive shaft comprising a shaped outer surface, complementary to the shaped inner surface of said bushing, and wherein the first pair of cylindrical projections are inserted, with the respective interposition of a first pair of bearings, in the first pair of recesses of the ring, wherein the second pair of cylindrical projections of the ring are inserted, with the interposition of a second pair of bearings, in the second pair of recesses of the driven tubular shaft and wherein the tubular shaft is assembled to a third pair of bearings.

Said third pair of bearings are mounted on an outer surface of said tubular shaft and configured to fasten the cogwheel, the bushing being located inside the ring, connected by means of a joint articulated on an axis, and the ring located inside the tubular shaft, connected by means of a joint articulated on another shaft.

The inner shaped surface of the bushing and the external shaped surface of the drive shaft means that both surfaces comprise a suitable shape or cross section to fit together, enabling the transmission of the torque, these may be standard splines that are complementary to each other, or comprise a pin system with a groove and tightening.

Furthermore, the joint comprises a clearance between the outer surface of the bushing and the inner surface of the ring, configured so that the bushing rotates with respect to a first transverse axis defined by the first pair of cylindrical projections. The possible angle of rotation is determined by the clearance between the bushing and the ring inside of which it is located.

Likewise, the joint comprises a clearance between the outer surface of the ring and the inner surface of the tubular shaft, configured so that the ring rotates with respect to a second transverse axis defined by the second pair of cylindrical projections; likewise, the angle of rotation will be determined by the clearance between the ring and the driven tubular shaft, inside which it is housed.

In short, since the axis with respect to which the ring rotates is orthogonal to the axis with respect to which the bushing rotates, it is possible to absorb the deviations between the drive shaft and the driven tubular shaft, according to said axes.

Furthermore, the cogwheel integral to the driven tubular shaft can be engaged to a chain, a notched belt or a second cogwheel engaged thereto, as the transmission body of the movement, or it could be carried out by a connection pulley connected to a belt or any other equivalent transmission body.

To complement the following description and for the purpose of helping to better understand the features of the invention, a set of drawings is attached to the present specification, in the figures of which, by illustration and not limitation, the most characteristic details of the invention are represented.

### BRIEF DESCRIPTION OF THE FIGURES

Figure 1 shows a first perspective view of a cardan drive made up of a conventional cardan knot and a cardan joint object of the invention, in an aligned position, showing how the drive shaft with standard splines is connected to the cardan joint object of the invention, which is integrated in the driven shaft of the gear cogwheel of the mechanism to which the movement must be transmitted, being able to be positioned very far from the conventional knot.
Figure 2 shows a second perspective view of the cardan drive of the previous figure, showing how the drive shaft with standard splines has been moved by the cardan joint object of the invention, or vice versa, the cardan joint being integrated in the driven shaft of the gear cogwheel, and enabling both joints to be located at different distances between them.
Figure 3 shows a perspective view of the elements that make up the cardan joint object of the invention according to an exploded breakdown thereof.
Figure 4 shows a perspective view of the assembled cardan joint object of the invention.
Figure 5 shows a front elevation view of the previous figure, showing the elements that form the cardan joint object of the invention.
Figure 6 shows a cross-sectional view of the cardan joint, according to the I-I' diametral cut.
Figure 7 shows a cross-sectional view of the cardan joint, according to the diametral cut II-II', orthogonal to the cut of the previous figure.
Figure 8 shows a view of a conventional cardan drive with a distance "D" between the joints and an overlapping distance "d" of the drive shaft, in an aligned position.
Figure 9 shows a view of a cardan drive made up of a conventional cardan knot and a cardan joint object of the invention, showing how it presents a distance "D1", in an aligned position.
Figure 10 shows a view of the cardan drive of the previous figure in which the distance between knots "D2" is smaller with respect to the distance "D1".
Figure 11 shows a view of a conventional cardan drive with the knots thereof misaligned by a width "B", according to the coordinate axis, requiring an inclination of α° on the drive shaft, for a longitudinal distance "A" to the cogwheel integral to the driven shaft.
Figure 12 shows a view of a cardan drive provided with a cardan joint object of the invention with its knots misaligned by a width "B", according to the coordinate axis, requiring an inclination of β° on the drive shaft, for a distance "A" between knots.

### DESCRIPTION OF A PREFERRED EMBODIMENT

In light of the aforementioned figures and in accordance with the numbering adopted, it can be seen how the cardan joint 1 object of the invention is made up of an internally-shaped bushing 3 provided with a first pair of cylindrical projections 4 on its outer surface, diametrically facing each other; a ring 5 provided with a first pair of recesses 6, diametrically facing each other, and a second pair of cylindrical projections 7 located on the outer surface thereof and in a position, two by two, orthogonal to the first pair of recesses 6; a driven tubular shaft 8, provided with a second pair of recesses 9 diametrically facing each other and a cogwheel 10 integrally mounted to the driven tubular shaft 8, in which a drive chain is engaged to transmit the movement to the corresponding working mechanism. Alternatively, the cogwheel 10 can be engaged to a movement-transmitting second cogwheel, or it could be replaced by any other equivalent drive means such as a drive chain or belt.

In this way, the bushing 3 is connected to the drive shaft 11 with a shaped outer surface that is complementary to the inner shaped surface of the bushing 3 and the first pair of cylindrical projections 4 thereof of its outer surface are inserted, with the interposition of a first pair of bearings 12, in the first recesses 6 of the ring 5, while the second pair of cylindrical projections 7 of the ring 5 are inserted, with the interposition of a second pair of bearings 13, in the second pair of recesses 9 of the driven tubular shaft 8, and the driven tubular axis 8 being supported by a third pair of bearings 14.

The internal shaping of the bushing 3 and the drive shaft 11 is defined by standard splines that are complementary to each other, as shown in the figures, or by any other equivalent means, such as complementary axial ribs.

Furthermore, there is a clearance between the outer surface of the bushing 3 and the inner surface of the ring 5 in which the bushing 3 is located that allows the bushing 3 to rotate with respect to an axis defined by the first pair of cylindrical projections 4 thereof, allowing a transverse rotation of the ring with respect to said axis.

Likewise, there is another clearance between the outer surface of the ring 5 and the inner surface of the driven tubular shaft 8, in which it is located, that allows the transverse rotation of the ring 6 with respect to the axis defined by the second pair of cylindrical projections 7 of the ring, such that since the axis with respect to which the ring 5 rotates is orthogonal to the axis with respect to which the bushing 3 rotates, it enables the absorption of the deviations between the drive shaft 11 and the driven tubular shaft 8.

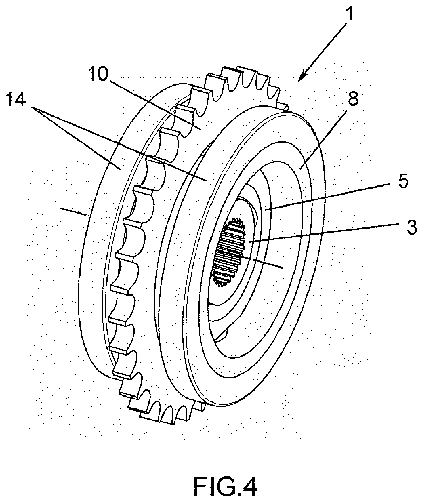

As can be seen in Figure 4, the cogwheel 10 is integrally mounted to the driven tubular shaft 8 by any conventional means.

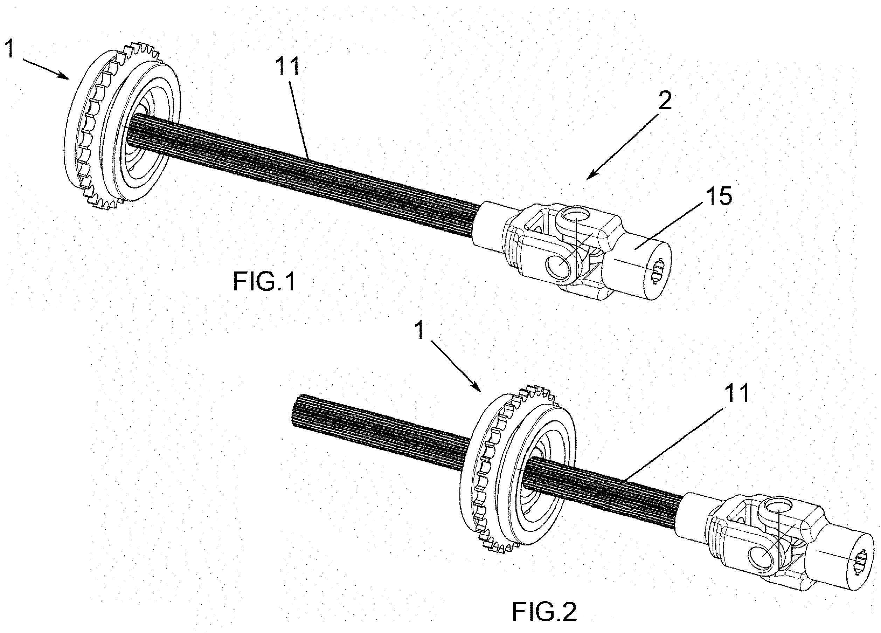

Referring to Figures 1 and 2 we can see how the drive shaft 11, configured to receive the movement of the drive shaft 15 through a conventional cardan knot 2, is connected to the cardan joint 1, object of the invention, through the bushing 3, transmitting movement to the driven tubular shaft 8.

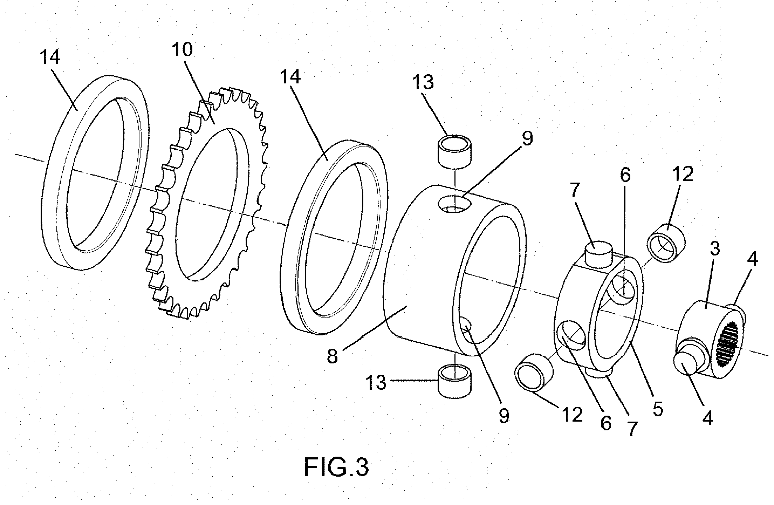

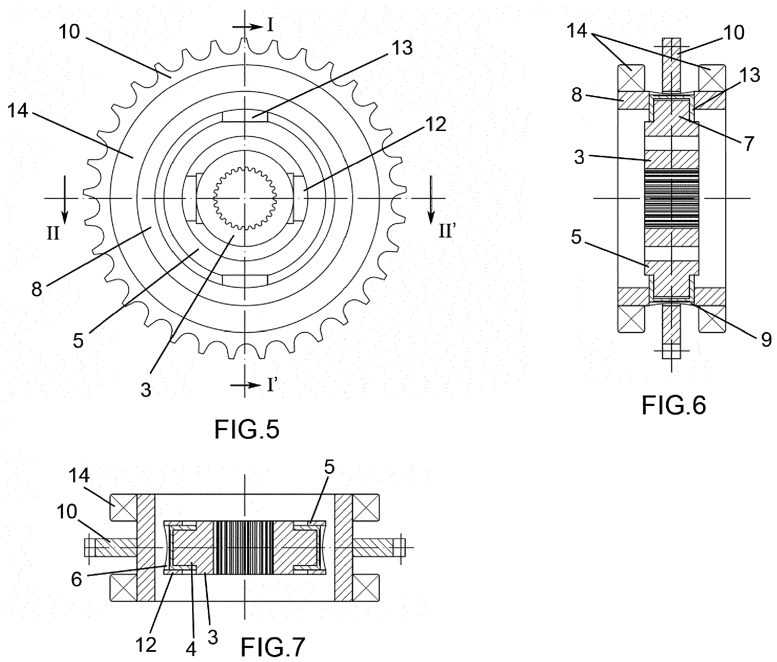

Figure 3 shows the exploded breakdown of the elements forming the cardan joint 1 object of the invention, while Figure 4 shows the assembly of said cardan joint 1 and Figure 5 shows it according to a front elevation view.

Furthermore, Figures 6 and 7 respectively show cross-sectional views of the cardan joint 1 of Figure 5, along two diametral axes that are orthogonal to each other, relative to central cuts made transversely to the second pair of cylindrical projections 7 of the ring 5 and to the first pair of cylindrical projections 4 of the bushing 3, respectively.

Thus, it can be seen how the bushing 3 is connected to the ring 5 by inserting the first pair of cylindrical projections 4 of the bushing 3 into the first pair of recesses 6 of the ring 5 with the interposition of the first pair of bearings 12, enabling a slight transverse rotating movement of the bushing 3 with respect to an axis defined by the first pair of cylindrical projections 4.

Furthermore, the ring 5 is connected to the driven tubular shaft 8 by inserting the second pair of cylindrical projections 7 of the ring 5 into the second pair of recesses 9 of the driven tubular shaft 8 with the interposition of the second pair of bearings 13, allowing a slight transverse rotating movement of the ring 5 with respect to an axis defined by the second pair of cylindrical projections 7.

In this way, since the axis defined by the first pair of cylindrical projections 4 is orthogonal with respect to the axis defined by the second pair of cylindrical projections 7, an oscillation of the assembly of the bushing 3 with the ring 5 is obtained which allows different alignments to be absorbed, with the connection of the drive shaft 11, between the conventional knot 2 and the cardan knot 1 object of the invention.

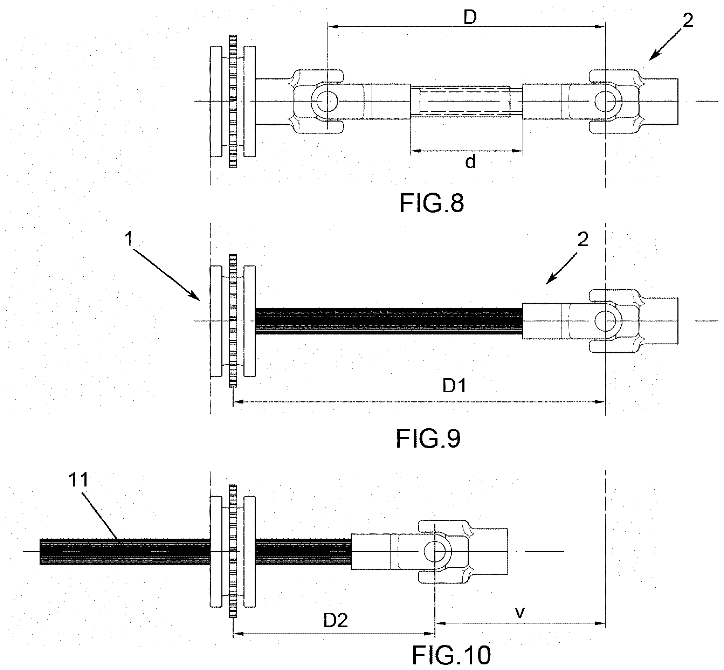

Figure 8 of the designs shows a conventional cardan drive with a distance between knots "D" and an overlapping distance "d" of the telescopic drive shaft. This distance "d" delimits the possible separation between knots, that is, depending on what type of knots they are and the separation distance between them "D", the distance "d" is obtained.

Figures 9 and 10 show an equivalent cardan drive provided with a cardan joint 1 object of the invention, showing how the distance "D1" between knots is somewhat greater than the distance "D"; therefore, the possible variation "v" between knots is somewhat greater than the distance "d". That is, the configuration of the described cardan joint 1 enables a greater range of positions in a cardan drive, without the limitations of a common knot.

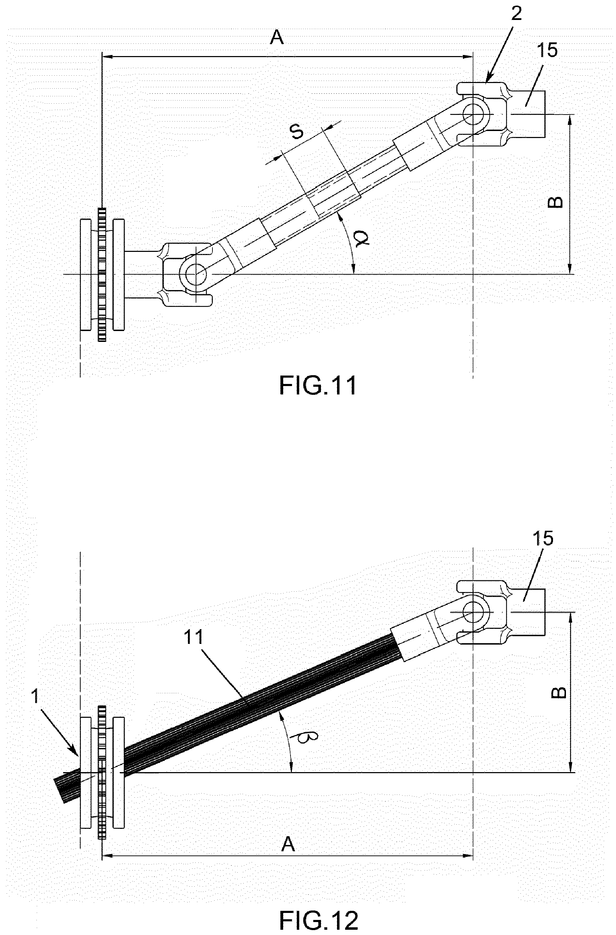

Furthermore and so as to clarify, where possible, the behaviour of the assembly of the bushing 3 with the ring 5, Figure 11 shows a cardan drive where the drive shaft comprises an inclination of α°, while a similar cardan drive is shown in Figure 12 provided with the cardan joint 1 object of the invention, where the drive shaft is inclined by β °. As can be seen in both Figures 11 and 12, for the same deviated width "B" and the same separation length "A", the drive comprising the cardan joint 1 object of the invention requires a smaller angle than the drive with two common cardan knots, that is to say that β is smaller than α, being an advantage of the mechanism.

Likewise, it is verified that by means of a conventional cardan drive, the overlap is considerably reduced, while by means of a cardan drive provided with the cardan joint 1, object of the invention, the overlap is invariable, such that at the same radial deviation, the angle between shafts that converge in each cardan knot is different, and, thus, with the cardan joint 1, it is smaller, since the distance between knots is greater, which entails a longer useful life of the mechanism, since the resulting forces on the bearings of the knots, as well as on the elements of the knot, is also smaller.

Another advantage of the cardan joint is that, while in the conventional cardan transmission with lobe-shaped tubes or even with standard splines coupling over short distances, the overlap between shafts is reduced, compromising the resistance of the coupling of the tubes, as well as the operation of the drive in terms of vibrations, while with the cardan joint 1 object of the invention the overlap between the drive shaft 11 and the bushing 3 with standard splines, is always the same, regardless of the angle and thus, it is enough to provide the drive shaft 11 with sufficient length behind the cogwheel 10, integral to the driven tubular shaft 8, and of sufficient width of the bushing 3 with standard splines to give a correct overlap depending on the torque and speed function.

In addition, since the shaft 11 with standard splines can be axially moved through the bushing 3 with standard splines, a large movement thereof is enabled, enabling the distance between joints of the cardan drive to be quite high and sufficient to enable operations such as those indicated of transverse movements of a head, with respect to the tractor vehicle, so as to adapt said asymmetric head to the work and road transport positioning without the need to disassemble the cardan drives, while allowing great proximity between knots.

Thus, this execution provides an important advantage, both for saving the time invested and for the elimination of possible accidents in the disengagement and engagement operations of the cardan drives.

## Claims

1. A cardan joint (1) configured to be assembled on a drive shaft (11), wherein the cardan joint (1) comprises:
- a bushing (3) that comprises a shaped inner surface, and a first pair of cylindrical projections (4) diametrically facing each other, located on an outer surface and perpendicular to said bushing (3);
- a ring (5) comprising a first pair of recesses (6), on an inner surface, diametrically facing each other and perpendicular to said ring (5), and a second pair of cylindrical projections (7), wherein each one of the cylindrical projections (7) is orthogonal to each one of the first pair of recesses (6), on an outer surface of the ring (5) ;
- a driven tubular shaft (8) comprising a second pair of recesses (9) diametrically facing each other, on an inner surface of said tubular shaft (8); and
- a cogwheel (10) integrally mounted on the driven tubular shaft (8), configured to engage with a drive means;
wherein the bushing (3) is configured to be connected to a drive shaft (11) comprising a shaped outer surface, complementary to the shaped inner surface of said bushing (3), and wherein the first pair of cylindrical projections (4) are inserted, with the respective interposition of a first pair of bearings (12), in the first pair of recesses (6) of the ring (5), wherein the second pair of cylindrical projections (7) of the ring (5) are inserted, with the interposition of a second pair of bearings (13), in the second pair of recesses (9) of the driven tubular shaft (8) and wherein the tubular shaft (8) is assembled to a third pair of bearings (14).

2. The cardan joint (1) according to claim 1, wherein it comprises a clearance between the outer surface of the bushing (3) and the inner surface of the ring (5), configured so that the bushing (3) rotates with respect to a first transverse axis defined by the first pair of cylindrical projections (4) .

3. The cardan joint (1) according to any of the preceding claims, wherein it comprises a clearance between the outer surface of the ring (5) and the inner surface of the tubular shaft (8), configured so that the ring (5) rotates with respect to a second transverse axis defined by the second pair of cylindrical projections (7).

4. The cardan joint (1) according to claim 3, wherein the first transverse axis is orthogonal to the second transverse axis.

5. The cardan joint (1) according to any of the preceding claims, wherein the cogwheel (10) is adapted to engage a drive means selected from the group consisting of a chain, a notched belt and a geared pulley.

## Patentansprüche

1. Ein zur Montage auf einer Antriebswelle (11) ausgestaltetes Kardangelenk (1), wobei das Kardangelenk (1) Folgendes umfasst:
- eine Muffe (3) mit einer profilierten Innenfläche und einem ersten Paar einander diametral gegenüberliegender zylindrischer Vorsprünge (4), die auf der Außenseite rechtwinklig an der genannten Muffe (3) angeordnet sind;
- einen Ring (5) mit einem ersten Paar einander diametral gegenüberliegender Ausnehmungen (6) auf der Innenseite und rechtwinklig an dem genannten Ring (5) und einem zweiten Paar zylindrischer Vorsprünge (7) auf der Außenseite des Rings (5), wobei die einzelnen zylindrischen Vorsprünge (7) jeweils senkrecht zu den einzelnen Ausnehmungen (6) des ersten Paars von Ausnehmungen liegen;
- eine angetriebene Hohlwelle (8) mit einem zweiten Paar einander diametral gegenüberliegender Ausnehmungen (9) auf der Innenseite der genannten Hohlwelle (8); und
- ein einstückig auf der angetriebenen Hohlwelle (8) aufgebrachtes Zahnrad (10), das zum Eingriff mit einer Antriebsvorrichtung ausgebildet ist;
wobei die Muffe (3) zur Verbindung mit einer Antriebswelle (11) mit einer komplementär zur profilierten Innenseite der genannten Muffe (3) profilierten Außenseite ausgestaltet ist, und wobei das erste Paar zylindrischer Vorsprünge (4) unter entsprechender Zwischenanordnung eines ersten Paars von Lagern (12) in das am Ring (5) befindliche erste Paar von Ausnehmungen (6) eingebracht ist, wobei das am Ring (5) befindliche zweite Paar zylindrischer Vorsprünge (7) unter Zwischenanordnung eines zweiten Paars von Lagern (13) in das an der angetriebenen Hohlwelle (8) befindliche zweite Paar von Ausnehmungen (9) eingebracht ist und wobei die Hohlwelle (8) mit einem dritten Paar von Lagern (14) verbunden ist.

2. Kardangelenk (1) nach Anspruch 1, das zwischen der Außenseite der Muffe (3) und der Innenseite des Rings (5) einen Zwischenraum aufweist, der dazu ausgelegt ist, dass sich die Muffe (3) um eine erste, durch das erste Paar zylindrischer Vorsprünge (4) gebildete Querachse dreht.

3. Kardangelenk (1) nach einem der vorstehenden Ansprüche, das zwischen der Außenseite des Rings (5) und der Innenseite der Hohlwelle (8) einen Zwischenraum aufweist, der so ausgelegt ist, dass sich der Ring (5) um eine zweite, durch das zweite Paar zylindrischer Vorsprünge (7) gebildete Querachse dreht.

4. Kardangelenk (1) nach Anspruch 3, wobei die erste Querachse senkrecht zur zweiten Querachse verläuft.

5. Kardangelenk (1) nach einem der vorstehenden Ansprüche, wobei das Zahnrad (10) zum Eingriff mit einer Antriebsvorrichtung aus der Gruppe bestehend aus Kette, Zahnriemen und Riemenscheibe bestimmt ist.

## Revendications

1. Joint de cardan (1) configuré pour être assemblé sur un arbre de transmission (11), dans lequel le joint de cardan (1) comprend :
- une douille (3) qui comprend une surface interne profilée, et une première paire de saillies cylindriques (4) diamétralement opposées, situées sur une surface externe et perpendiculaires à ladite douille (3) ;
- un anneau (5) comprenant une première paire d'évidements (6), sur une surface intérieure, diamétralement opposés l'un à l'autre et perpendiculaires audit anneau (5), et une deuxième paire de saillies cylindriques (7), dans laquelle chacune des saillies cylindriques (7) est orthogonale à chacune de la première paire d'évidements (6), sur une surface extérieure de l'anneau (5) ;
- un arbre tubulaire entraîné (8) comprenant une deuxième paire d'évidements (9) diamétralement opposés l'un à l'autre, sur une surface intérieure dudit arbre tubulaire (8) ; et
- une roue dentée (10) montée intégralement sur l'arbre tubulaire mené (8), configurée pour s'engager avec un moyen de transmission ;
dans lequel la douille (3) est configurée pour être connectée à un arbre de transmission (11) comprenant une surface extérieure formée, complémentaire à la surface intérieure formée de ladite douille (3), et dans lequel la première paire de saillies cylindriques (4) est insérée, avec l'interposition respective d'une première paire de paliers (12), dans la première paire d'évidements (6) de l'anneau (5), dans lequel la deuxième paire de saillies cylindriques (7) de l'anneau (5) est insérée, avec l'interposition d'une deuxième paire de paliers (13), dans la deuxième paire d'évidements (9) de l'arbre tubulaire entraîné (8) et dans lequel l'arbre tubulaire (8) est assemblé à une troisième paire de paliers (14).

2. Joint de cardan (1) selon la revendication 1, dans lequel il comprend un jeu entre la surface extérieure de la douille (3) et la surface intérieure de l'anneau (5), configuré de sorte que la douille (3) tourne par rapport à un premier axe transversal défini par la première paire de projections cylindriques (4).

3. Le joint de cardan (1) selon l'une quelconque des revendications précédentes, dans lequel il comprend un jeu entre la surface extérieure de l'anneau (5) et la surface intérieure de l'arbre tubulaire (8), configuré de sorte que l'anneau (5) tourne par rapport à un deuxième axe transversal défini par la deuxième paire de projections cylindriques (7).

4. Joint de cardan (1) selon la revendication 3, dans lequel le premier axe transversal est orthogonal au deuxième axe transversal.

5. Joint de cardan (1) selon l'une quelconque des revendications précédentes, dans lequel la roue dentée (10) est adaptée pour engager un moyen d'entraînement choisi dans le groupe constitué par une chaîne, une courroie crantée et une poulie dentée.
